# EUROPEAN PATENT SPECIFICATION

(11) **EP 2 330 779 B1**
(45) Date of publication and mention of the grant of the patent: **23.12.2015**
(21) Application number: 09815627.6
(22) Date of filing: 27.09.2009
(51) Int. Cl.: H04L 29/06, H04W 48/00, H04W 84/04, H04W 74/00

(54) **METHOD, DEVICE AND SYSTEM FOR ACCESSING TO PACKET DATA NETWORK**
VERFAHREN, VORRICHTUNG UND SYSTEM FÜR DEN ZUGANG ZU EINEM PAKETDATENNETZ
PROCÉDÉ, DISPOSITIF ET SYSTÈME D'ACCÈS À UN RÉSEAU À COMMUTATION DE PAQUETS

(30) Priority: 28.09.2008 CN 200810168477
(43) Date of publication of application: 08.06.2011
(60) Divisional application: 15183427.2
(73) Proprietor: Huawei Technologies Co., Ltd., Longgang District Shenzhen, Guangdong 518129 (CN)
(72) Inventor: ZHANG, Yanping, Guangdong 518129 (CN); ZHOU, Han, Guangdong 518129 (CN); WU, Wenfu, Guangdong 518129 (CN); HU, Weihua, Guangdong 518129 (CN)
(74) Representative: Pfenning, Meinig & Partner GbR
(86) International application number: PCT/CN2009/074251
(87) International publication number: WO 2010/034258

(56) References cited:
- WO-A1-03/058996
- WO-A1-2005/048630
- WO-A1-2007/129045
- WO-A2-2008/096013
- CN-A- 1 852 304
- CN-A- 101 001 184
- KR-A- 20040 006 993
- US-A1- 2006 221 986
- US-A1- 2006 258 356
- US-A1- 2007 253 359
- US-A1- 2008 069 068
- US-A1- 2008 076 386
- US-A1- 2008 181 124
- US-A1- 2008 192 711
- US-B1- 7 185 067
- 3GPP TR 23.882 V8.0.0 (2008-09) 24 September 2008, pages 25 - 27, XP050364130

## Description

### TECHNICAL FIELD

The present invention relates to network technologies, and in particular, to a method, an apparatus, and a system for accessing a Packet Data Network (PDN).

### BACKGROUND

A Femtocell system includes a wireless access point device, generally known as Femto Access Point (AP), which provides the wireless access function. The AP accesses the Internet through a router or Digital Subscriber Line (DSL) modem based on broadband access, and then accesses the network of the mobile operator. In a Long Term Evolution (LTE) network architecture of the 3rd Generation Partnership Project (3GPP), the AP is called Home Evolved Node B (HeNB); in a UMTS Territorial Radio Access Network (UTRAN), the AP is called Home Node B (HNB).

In the Femtocell architecture, the HNB/HeNB is connected with a Packet Data Network (PDN) in two modes: Traditionally, the HNB/HeNB is connected with the PDN through a Gateway GPRS Supporting Node (GGSN) or a PDN Gateway (GW); or, as put forward currently, the HNB/HeNB is connected with the PDN directly in order to save network resources of the operator.

Therefore, when a Serving GPRS Supporting Node (SGSN) receives an Activate Packet Data Protocol (PDP) Context Request, the SGSN selects a GGSN/PDN GW to create PDP context information for the User Equipment (UE) according to an Access Point Name (APN) carried in the Activate PDP Context Request only if the APN is legal, no matter which APN is included in the Active PDP Context Request. The UE may access the external PDN through the GGSN/PDN GW. If the UE can access the PDN through the HNB/HeNB directly or through the GGSN/PDN GW, the SGSN is unable to decide whether the UE will access the PDN through the HNB/HeNB directly or through the GGSN/PDN GW after receiving the Activate PDP Context Request from the UE.

US 2007/0253359 discloses a system, apparatus and method wherein the network initiates a PDP context activation for a second PDP context using a new IP address that can be used for new transport sessions whenever one of more operator configured criteria apply.

US 2008/0069068 discloses an apparatus and method of an access node of a mesh network providing a client with wireless link quality information.

US 7185067 discloses a method of load balancing network access requests, wherein the method comprises receiving a network access request from a serving node linked two a radio access network, determining one or more gateways providing access to the data network, selecting one of the gateways and forwarding the network access request to the selected gateway.

The problems of the prior art are solved by the method for accessing a Packet Data Network, PDN, according to claim 1, the apparatus for accessing a Packet Data Network, PDN, according to claim 5 and the system for accessing a Packet Data Network according to claim 9. Advantageous embodiments of the method and apparatus for accessing a PDN are given by the respective dependent claims.

### SUMMARY

The embodiments of the present invention provide a method, an apparatus, and a system for accessing a PDN so that the SGSN can decide whether the UE will access the PDN through the HNB/HeNB directly or through the GGSN/PDN GW.

A method for accessing a PDN in an embodiment of the present invention includes:
obtaining, by a mobility management network element, MMNE, access information; and
selecting, by the MMNE, a home access network element, NE, to access the PDN through a Gi/SGi interface according to the access information;
wherein the access information comprises information about capabilities of a home access NE communicating through the Gi/SGi interface, and
the selecting, by the MMNE, the NE to access the PDN through the Gi/SGi interface according to the access information comprises:
   in the case of determining that the home access NE is capable of communicating through the Gi/SGi interface, connecting, by the MMNE, the home access NE with the PDN through the Gi/SGi interface on the home access NE.

An apparatus for accessing a PDN in an embodiment of the present invention includes:
an information obtaining unit, configured to obtain access information; and
a selecting unit, configured to select a home access network element, NE, to access the PDN through a Gi/SGi interface according to the access information;
wherein the access information comprises information about capabilities of the a home access NE communicating through the Gi/SGi interface, and
the selecting unit is configured to in the case of determine that the home access NE is capable of communicating through the Gi/SGi interface, connect the home access NE with the PDN through the Gi/SGi interface on the home access NE.

### BRIEF DESCRIPTION OF THE DRAWINGS

FIG. 1 shows how a UE accesses a PDN through an HNB/GGSN/PDN GW in a Femtocell architecture;
FIG. 2 is a flowchart of a method for accessing a PDN in an embodiment of the present invention;
FIG. 3 is a flowchart of obtaining access information in an embodiment of the present invention;
FIG. 4 is flowchart of selecting an NE through a Gi/SGi interface according to access information in an embodiment of the present invention;
FIG. 5 shows a structure of an apparatus for accessing a PDN in an embodiment of the present invention;
FIG. 6 shows a structure of a selecting unit of an apparatus for accessing a PDN in an embodiment of the present invention;
FIG. 7 shows a structure of a system for accessing a PDN in an embodiment of the present invention;
FIG. 8 is a flowchart of a method for accessing a PDN in an embodiment of the present invention;
FIG. 9 is a flowchart of another method for accessing a PDN in an embodiment of the present invention; and
FIG. 10 is a flowchart of another method for accessing a PDN in an embodiment of the present invention.

### DETAILED DESCRIPTION OF THE EMBODIMENTS

The embodiments of the present invention provide a method, an apparatus, and a system for selecting an AP for connection so that the SGSN can decide whether a UE will access a PDN through an HNB/HeNB directly or through a GGSN/PDN GW. The following describes the embodiments of the present invention in detail with reference to accompanying drawings.

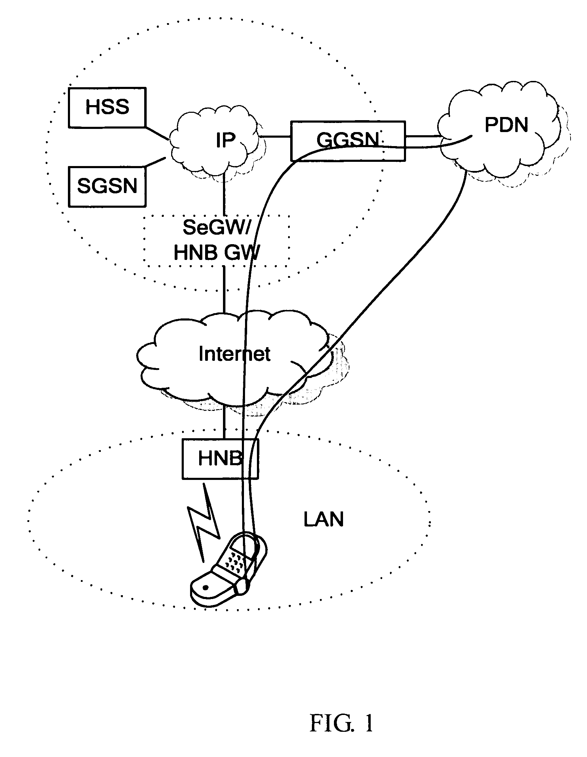

FIG. 1 shows network connection in a Femtocell architecture in an embodiment of the present invention. In this architecture, an HNB/HeNB is connected with a PDN in two modes: Traditionally, the HNB/HeNB is connected with the PDN through a GGSN or a PDN GW; or, as put forward currently, the HNB/HeNB is connected with the PDN directly in order to save network resources of the operator.

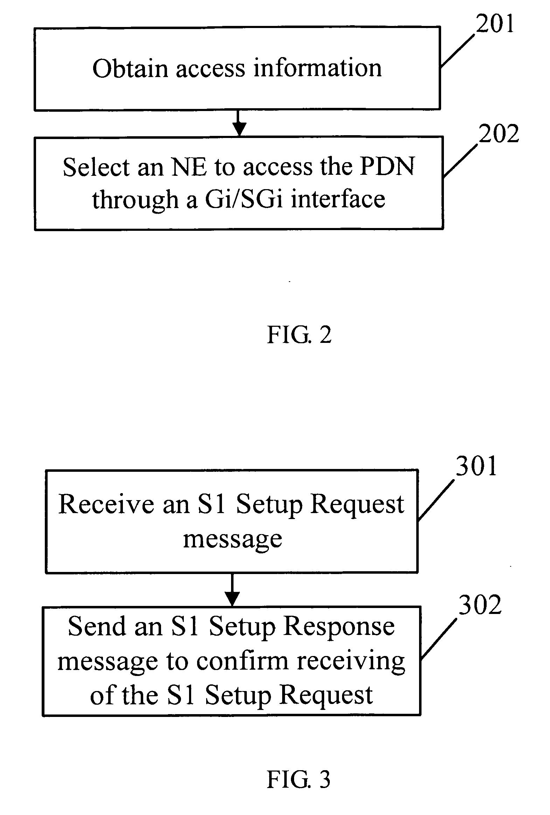

FIG. 2 is a flowchart of a method for accessing a PDN in an embodiment of the present invention. The method includes the following steps:
201. Obtain access information where the access information can be obtained according to an S 1 Setup Request message or according to pres-stored NE access information.
202. Select an NE to access a PDN through a Gi/SGi interface according to the access information.

When no home access GW exists between the UE and a Mobility Management Network Element (MMNE), the access information includes: information about capabilities of the home access NE communicating through the Gi/SGi interface, or subscription information of the user, or combination thereof. When a home access GW exists between the UE and the MMNE, the access information includes at least: information about capabilities of the home access NE communicating through the Gi/SGi interface, information about capabilities of the home access GW communicating through the Gi/SGi interface, or subscription information of the user, or any combination thereof.

It should be noted that in all embodiments of the present invention, in the case of selecting an NE to access the PDN through the Gi/SGi interface, namely, in the case of determining that the NE is capable of communicating through the Gi/SGi interface, the NE may be connected with the PDN through the Gi/SGi interface on the NE.

FIG. 3 is a flowchart of obtaining access information in an embodiment of the present invention.

301. Receive an S1 Setup Request message where the S1 Setup Request message includes the access information.

302. Send an S1 setup response message in response to the S1 Setup Request message.

When the foregoing steps are performed by an MMNE, the received S1 Setup Request message may be sent by a home access NE or a home access GW. When the home access GW exists, the home access GW sends the S1 Setup Request message; when no home access GW exists, the home access NE sends the S 1 Setup Request message.

Step 301 and step 302 above are also applicable to this scenario: A home access NE sends an S1 Setup Request message to a home access GW, where the message includes information about the capabilities of the home access NE, namely, information about the capability of communicating through the Gi/SGi interface. The home access GW stores the information about capabilities of the home access NE, namely, capability of communicating through the Gi/SGi interface, and reports its own capability information to the MMNE.

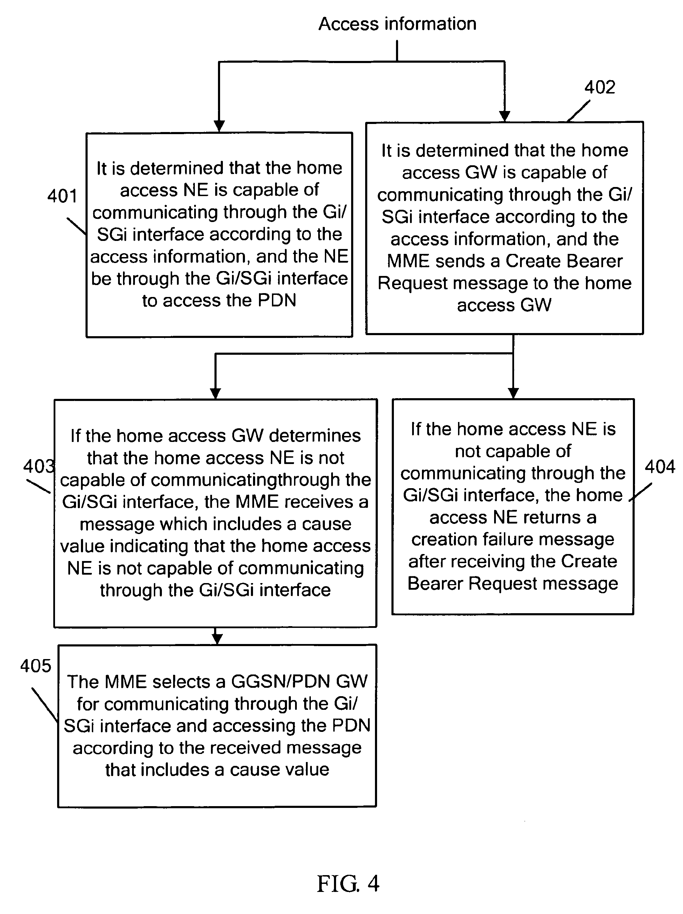

FIG. 4 is flowchart of selecting an NE through a Gi/SGi interface according to access information in an embodiment of the present invention. The process includes the following steps:
401. If the access information includes the information about capability of the home access NE communicating through the Gi/SGi interface, or subscription information of the user, or combination thereof, the MMNE determines that the UE can access the PDN through the home access NE capable of communicating through the Gi/SGi interface according to the access information, and sends a Create Bearer Request message to the home access NE.

If the access information is the information about capability of the home access GW communicating through the Gi/SGi interface, or a combination of the information about capability of the home access GW communicating through the Gi/SGi interface and subscription information of the user, the step of selecting an NE to access the PDN through the Gi/SGi interface includes:
402. If it is determined that the UE can access the PDN through a home access GW capable of communicating through the Gi/SGi interface according to the access information, the MMNE sends a Create Bearer Request message to the home access GW.
403. If the home access GW determines that the home access NE is not capable of communicating through the Gi/SGi interface, the MMNE receives a message which includes a cause value indicating that the home access NE is not capable of communicating through the Gi/SGi interface; or
404. If the home access NE is not capable of communicating through the Gi/SGi interface, the home access NE returns a creation failure message after receiving the Create Bearer Request message.

If the home access GW determines that the home access NE is not capable of communicating through the Gi/SGi interface, after the MMNE receives a message which includes a cause value indicating that the home access NE is not capable of communicating through the Gi/SGi interface, the process further includes:
405: The MMNE selects a GGSN/PDN GW to access the PDN through the Gi/SGi interface according to the received message that includes a cause value.

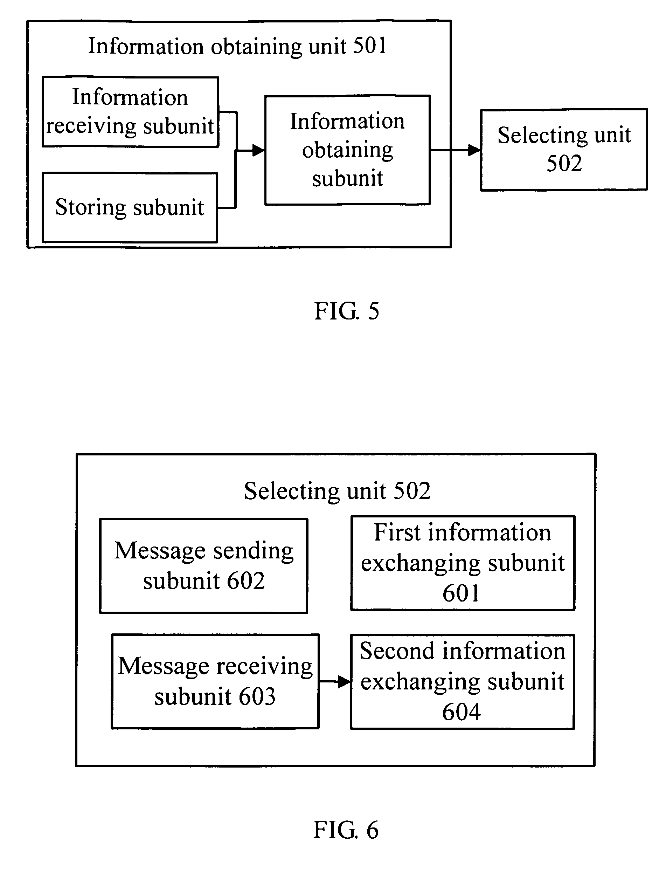

FIG 5 shows an apparatus for accessing a PDN in an embodiment of the present invention. The apparatus includes:
an information obtaining unit 501, configured to obtain access information; and
a selecting unit 502, configured to select an NE to access the PDN through a Gi/SGi interface according to the access information.

The access information may be obtained through an information obtaining subunit in the information obtaining unit 501 from an information receiving subunit or storing subunit.

The information receiving subunit is configured to receive an S1 Setup Request that includes the access information.

The storing subunit is configured to store the access information of the NE, namely, store the access information of the NE through preconfiguration.

FIG. 6 shows an apparatus for accessing a PDN in an embodiment of the present invention. The selecting unit 502 in this apparatus further includes:
a first information exchanging subunit 601, configured to determine that the UE can access the PDN through a home access NE capable of communicating through the Gi/SGi interface according to the access information, whereupon the MMNE sends a Create Bearer Request message to the home access NE.

If the access information is the information about capability of the home access GW communicating through the Gi/SGi interface, or a combination of the information about capability of the home access GW communicating through the Gi/SGi interface and subscription information of the user, the selecting unit includes:
a message sending subunit 602, configured to determine that the UE is capable of accessing the PDN through a home access GW capable of communicating through the Gi/SGi interface according to the access information, whereupon the MMNE sends a Create Bearer Request message to the home access GW;
a message receiving subunit 603, configured to receive a creation failure message returned by the home access NE after the home access GW determines that the home access NE is not capable of communicating through the Gi/SGi interface and the MMNE receives a message which includes a cause value indicating that the home access NE is not capable of communicating through the Gi/SGi interface, or after the home access NE receives a Create Bearer Request message when the home access NE is not capable of communicating through the Gi/SGi interface.
a second information exchanging subunit 604, configured to select a GGSN/PDN GW to access the PDN through the Gi/SGi interface according to the received message that includes a cause value.

The embodiments of the present invention are expounded in more detail below with reference to accompanying drawings.

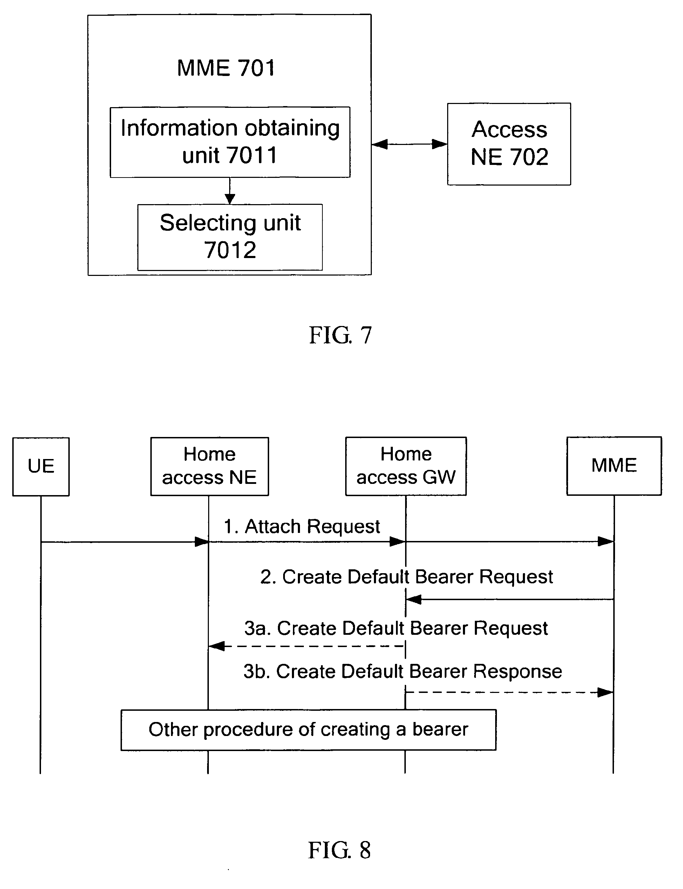

As shown in FIG. 7, a system for accessing a PDN is provided in an embodiment of the present invention. The system includes:
an MMNE 701, configured to receive or store access information of an access NE, judge access capability of the access NE according to the access information, and select the access NE to access the PDN through a Gi/SGi interface; and
the access NE 702, configured to exchange information between a UE and the PDN.

The MMNE 701 includes:
an information obtaining unit 7011, configured to obtain access information; and
a selecting unit 7012, configured to select an NE to access the PDN through a Gi/SGi interface according to the access information.

When a home access GW exists between the UE and the MMNE, the selecting unit 7012 includes:
a message sending subunit, configured to determine that the UE is capable of accessing the PDN through a home access GW capable of communicating through the Gi/SGi interface according to the access information, whereupon the MMNE sends a Create Bearer Request message to the home access GW; and
a message receiving subunit, configured to, when the home access GW determines that the home access NE is not capable of communicating through the Gi/SGi interface, the MMNE receives a message which includes a cause value indicating that the home access NE is not capable of communicating through the Gi/SGi interface; or when the home access NE is not capable of through the Gi/SGi interface, receive a creation failure message returned by the home access NE after the home access NE receives a Create Bearer Request message.

FIG. 8 is a flowchart of a method for accessing a PDN in an embodiment of the present invention. The method includes the following steps:
1. A UE sends an Attach Request to an MMNE. The Attach Request includes an AP capability information. The AP capability information may be included in the Attach Request to the MMNE, or included in an S1 Setup Request message and sent by a home access NE or a home access GW to the MMNE, or configured in the MMNE.
2. After receiving the Attach Request, the MMNE sends a Create Default Bearer Request message to the AP according to the AP capability information.

If no home access GW exists between the UE and the MMNE, namely, if the AP is a home access NE, the MMNE judges whether the home access NE can be connected to the PDN through the Gi/SGi interface directly according to the AP capability information reported by the home access NE. The AP capability information here includes: information about capability of the home access NE communicating through the Gi/SGi interface, or a combination of the information about capability of the home access NE communicating through the Gi/SGi interface and subscription information of the user.

If a home access GW exists between the UE and the MMNE, namely, if the AP is a home access GW, the MMNE judges whether the home access NE can be connected to the PDN through the Gi/SGi interface directly according to the AP capability information reported by the home access GW. The AP capability information here includes: information about capability of the home access GW; or subscription data of the user; or a combination of the information about capability of the home access GW and subscription information of the user; or a combination of the information about capability of the home access NE, information about capability of the home access GW, and subscription information of the user. The process of reporting the AP capability information is shown in FIG. 3, and is not repeated here. The AP capability information may also be pre-stored on the MMNE.

3a. After the home access GW receives the Create Default Bearer Request, if the home access NE is capable of communicating through the Gi/SGi interface, the home access GW sends a Create Bearer Request to the home access NE.

3b. After the home access GW receives the Create Default Bearer Request, if the home access NE is not capable of communicating through the Gi/SGi interface, the home access GW sends a Create Bearer Response message to the MMNE, where the message includes a cause value indicating that the home access NE is not capable of communicating through the Gi/SGi interface.

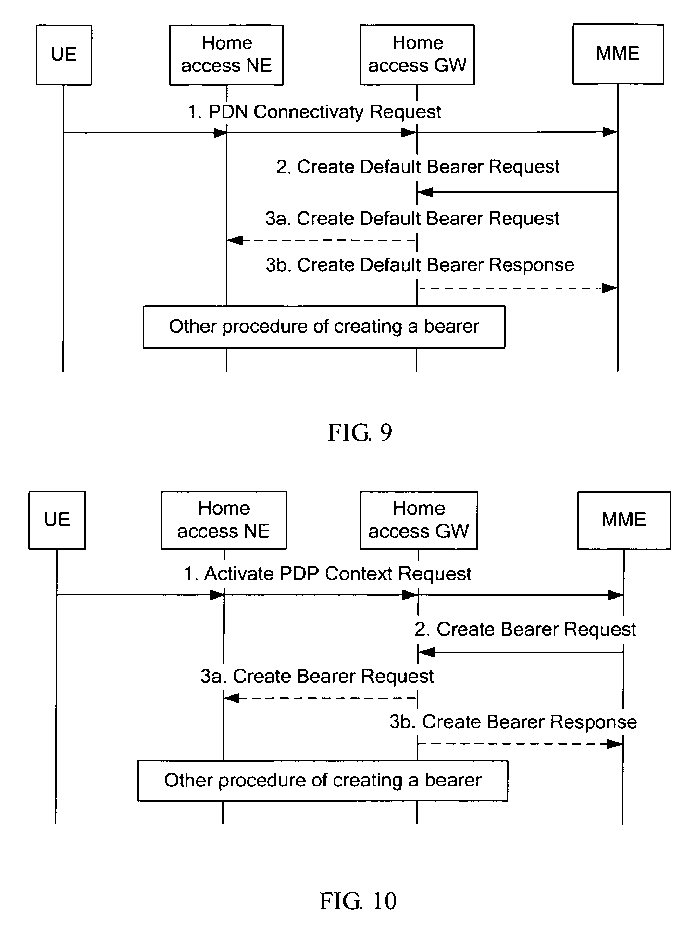

FIG. 9 is a flowchart of another method for accessing a PDN in an embodiment of the present invention. The method includes the following steps:
1. A UE sends a PDN Link Request to an MMNE. The PDN Link Request includes AP capability information. The AP capability information may be included in the PDN Link Request to the MMNE, or included in an S1 Setup Request and sent by a home access NE or a home access GW to the MMNE.
2. After receiving the Link Request, the MMNE sends a Create Default Bearer Request message to an AP according to the AP capability information.

If no home access GW exists between the UE and the MMNE, namely, if the AP is a home access NE, the MMNE judges whether the home access NE can be connected to the PDN through the Gi/SGi interface directly according to the AP capability information reported by the home access NE. The AP capability information here includes: information about capability of the home access NE, or a combination of the information about capability of the home access NE and subscription information of the user.

If a home access GW exists between the UE and the MMNE, namely, if the AP is a home access GW, the MMNE judges whether the home access NE can be connected to the PDN through the Gi/SGi interface directly according to the AP capability information reported by the home access GW. The AP capability information here includes: information about capability of the home access GW; or a combination of the information about capability of the home access GW and subscription information of the user; or a combination of the information about capability of the home access NE, information about capability of the home access GW, and subscription information of the user. The process of reporting the AP capability information is shown in FIG. 3, and is not repeated here. The AP capability information may also be pre-stored on the MMNE.

Alternatively, at least one link is already set up between the current UE and the PDN, and the link has communicated through the Gi/SGi interface through the home access NE to get connected with the PDN. Therefore, when the current UE needs to create a link to the PDN again, the current UE may communicate through the Gi/SGi interface through the home access NE to get connected with the PDN, or chooses to communicate through the Gi/SGi interface through the GGSN/PDN GW to get connected with the PDN, depending on the AP capability information.

3a. After the home access GW receives the Create Default Bearer Request, if the home access NE is capable of communicating through the Gi/SGi interface, the home access GW sends a Create Bearer Request to the home access NE.

3b. After the home access GW receives the Create Default Bearer Request, if the home access NE is not capable of communicating through the Gi/SGi interface, the home access GW sends a Create Bearer Response message to the MMNE, where the message includes a cause value indicating that the home access NE is not capable of communicating through the Gi/SGi interface.

FIG. 10 is a flowchart of another method for accessing a PDN in an embodiment of the present invention. The method includes the following steps:
1. A UE sends an Activate PDP Context Request to an MMNE. The Activate PDP Context Request includes AP capability information. The AP capability information may be included in the Activate PDP Context Request to the MMNE, or included in an S 1 Setup Request and sent by a home access NE or a home access GW to the MMNE.
2. After receiving the Activate PDP Context Request, the MMNE sends a Create Bearer Request message to an AP according to the AP capability information.

If no home access GW exists between the UE and the MMNE, namely, if the AP is a home access NE, the MMNE judges whether the home access NE can be connected to the PDN through the Gi/SGi interface directly according to the AP capability information reported by the home access NE. The AP capability information here includes: information about capability of the home access NE, or a combination of the information about capability of the home access NE and subscription information of the user.

If a home access GW exists between the UE and the MMNE, namely, if the AP is a home access GW, the MMNE judges whether the home access NE can be connected to the PDN through the Gi/SGi interface directly according to the AP capability information reported by the home access GW. The AP capability information here includes: information about capability of the home access GW; or a combination of the information about capability of the home access GW and subscription information of the user; or a combination of the information about capability of the home access NE, information about capability of the home access GW, and subscription information of the user. The process of reporting the AP capability information is shown in FIG. 3, and is not repeated here. The AP capability information may also be pre-stored on the MMNE. The subscription information of the user includes: information about the APN subscribed to by the user, and information about whether the UE is allowed to cross the Gi/SGi interface through the home access NE or home access GW to get connected with the PDN.

Alternatively, at least one link is already set up between the current UE and the PDN, and the link has communicated through the Gi/SGi interface through the home access NE to get connected with the PDN. Therefore, when the current UE needs to create a link to the PDN again, the current UE may communicate the Gi/SGi interface through the home access NE to get connected with the PDN, or chooses to communicate through the Gi/SGi interface through the GGSN/PDN GW to get connected with the PDN, depending on the AP capability information.

3a. After the home access GW receives the Create Bearer Request, if the home access NE is capable of communicating through the Gi/SGi interface, the home access GW sends a Create Bearer Request to the home access NE.

3b. After the home access GW receives the Create Bearer Request, if the home access NE is not capable of communicating through the Gi/SGi interface, the home access GW sends a Create Bearer Response message to the MMNE, where the message includes a cause value indicating that the home access NE is not capable of communicating through the Gi/SGi interface.

Through the method, apparatus, and system for accessing the PDN in the embodiments of the present invention, the MMNE obtains the access information to confirm the capability of the access NE, and selects the NE for communicating through the Gi/SGi interface. In the prior art, the UE can access the PDN through the HNB/HeNB directly or through the GGSN/PDN GW, and the SGSN is unable to decide whether the UE will access the PDN through the HNB/HeNB directly or through the GGSN/PDN GW. By comparison, the embodiments of the present invention can decide whether to communicate through the Gi/SGi interface according to the access information of the access NE. If it is decided to communicate through the Gi/SGi interface, the user can access the PDN through the HNB/HeNB directly. Because the core network NE (such as GGSN and PDN GW) is bypassed when the PDN network service is accessed through the HNB/HeNB directly, the load on the core network NE is relieved, and the network resources of the operator are saved.

Persons of ordinary skill in the art should understand that all or part of the steps of the method specified in any embodiment above may be implemented by a program instructing relevant hardware. The program may be stored in a computer readable storage medium such as ROM/RAM, magnetic disk or CD-ROM. When the program runs, the steps of the method specified in any embodiment above are performed.

The above descriptions are merely preferred embodiments of the present invention, but not intended to limit the scope of the present invention. Any modifications, variations, or replacement that can be easily derived by those skilled in the art shall fall within the scope of the present invention. Therefore, the protection scope of the present invention is subject to the appended claims.

## Claims

1. A method for accessing a packet data network, PDN, comprising:
obtaining (201), by a mobility management network element, MMNE, access information;
**characterized by** the method further comprising:
selecting (202), by the MMNE, a home access network element, NE, to access the PDN through a Gi/SGi interface according to the access information;
wherein the access information comprises information about capabilities of a home access NE communicating through the Gi/SGi interface, and
the selecting, by the MMNE, the NE to access the PDN through the Gi/SGi interface according to the access information comprises:
in the case of determining that the home access NE is capable of communicating through the Gi/SGi interface, sending, by the MMNE, a create bearer request message to the home access NE, so that the home access NE is connected with the PDN through the Gi/SGi interface on the home access NE.

2. The method for accessing a PDN according to claim 1, wherein the obtaining of the access information comprises:
receiving, by the MMNE, an S1 setup request message, where the S1 setup request message comprises the access information; and
obtaining, by the MMNE, the access information comprised in the S1 setup request message.

3. The method for accessing a PDN according to claim 1, wherein the obtaining, by the MMNE, the access information comprises:
storing, by the MMNE, the access information of the home access NE; and
obtaining, by the MMNE, the stored access information of the home access NE.

4. An apparatus for accessing a packet data network, PDN, comprising:
an information obtaining unit (501), configured to obtain access information;
**characterized by** the apparatus further comprising:
a selecting unit (502), configured to select a home access network element, NE, to access the PDN through a Gi/SGi interface according to the access information;
wherein the access information comprises information about capabilities of the home access NE communicating through the Gi/SGi interface, and
the selecting unit (502) is configured, in the case of determining that the home access NE is capable of communicating through the Gi/SGi interface, to send a create bearer request message to the home access NE, so that the home access NE is connected with the PDN through the Gi/SGi interface on the home access NE.

5. The apparatus for accessing a PDN according to claim 4, wherein the information obtaining unit comprises:
an information receiving subunit, configured to receive an S1 setup request message, the S1 setup request message comprises the access information; and
an information obtaining subunit, configured to obtain the access information comprised in the S1 setup request message.

6. The apparatus for accessing a PDN according to claim 5, wherein the information obtaining unit comprises:
a storing subunit, configured to store the access information of the home access NE; and
an information obtaining subunit, configured to obtain the stored access information of the home access NE.

7. A system for accessing a packet data network, PDN, comprising:
an apparatus for accessing a PDN according to any one of claim 4 to 6; and
an home access NE, configured to exchange information between a user equipment, UE, and a PDN;
wherein the apparatus for accessing a PDN is a mobility management network element, MMNE.

## Patentansprüche

1. Verfahren zum Zugreifen auf ein Paketdatennetzwerk PDN, umfassend:
Erhalten (201) von Zugangsinformationen durch ein "Mobility Management Network Element" MMNE;
**dadurch gekennzeichnet, dass** das Verfahren ferner Folgendes umfasst:
Auswählen (202) eines Heimat-Zugangsnetzelements NE durch das MMNE zum Zugreifen auf das PDN mittels einer Gi/SGi-Schnittstelle gemäß den Zugangsinformationen;
wobei die Zugangsinformationen Informationen über Fähigkeiten eines mittels der Gi/SGi-Schnittstelle kommunizierenden Heimat-Zugangs-NE umfassen und
das Auswählen des NE zum Zugriff auf das PDN mittels der Gi/SGi-Schnittstelle gemäß den Zugangsinformationen Folgendes umfasst:
falls bestimmt wird, dass das Heimat-Zugangs-NE in der Lage ist, mittels der Gi/SGi-Schnittstelle zu kommunizieren, Senden einer Trägererzeugungsanforderungsnachricht durch das MMNE zu dem Heimat-Zugangs-NE, so dass das Heimat-Zugangs-NE mittels der Gi/SGi-Schnittstelle an dem Heimat-Zugangs-NE mit dem PDN verbunden wird.

2. Verfahren zum Zugreifen auf ein PDN nach Anspruch 1, wobei das Erhalten der Zugangsinformationen Folgendes umfasst:
Empfangen einer S1-Aufbauanforderungsnachricht durch das MMNE, wobei die S1-Aufforderungsnachricht die Zugangsinformationen umfasst; und
Erhalten der in der S1-Aufbauanforderungsnachricht enthaltenen Zugangsinformationen durch das MMNE.

3. Verfahren zum Zugreifen auf ein PDN nach Anspruch 1, wobei das Erhalten der Zugangsinformationen durch das MMNE Folgendes umfasst:
Speichern der Zugangsinformationen des Heimat-Zugangs-NE durch das MMNE; und
Erhalten der gespeicherten Zugangsinformationen des Heimat-Zugangs-NE durch das MMNE.

4. Vorrichtung zum Zugreifen auf ein Paketdatennetzwerk PDN, umfassend:
eine Informationserhalteeinheit (501), ausgelegt zum Erhalten von Zugangsinformationen;
**dadurch gekennzeichnet, dass** die Vorrichtung ferner Folgendes umfasst:
eine Auswahleinheit (502), ausgelegt zum Auswählen eines Heimat-Zugangsnetzelements NE durch das MMNE zum Zugreifen auf das PDN mittels einer Gi/SGi-Schnittstelle gemäß den Zugangsinformationen;
wobei die Zugangsinformationen Informationen über Fähigkeiten des mittels der Gi/SGi-Schnittstelle kommunizierenden Heimat-Zugangs-NE umfassen und
die Auswahleinheit (502) für Folgendes ausgelegt ist:
falls bestimmt wird, dass das Heimat-Zugangs-NE in der Lage ist, mittels der Gi/SGi-Schnittstelle zu kommunizieren, Senden einer Trägererzeugungsanforderungsnachricht durch das MMNE zu dem Heimat-Zugangs-NE, so dass das Heimat-Zugangs-NE mittels der Gi/SGi-Schnittstelle an dem Heimat-Zugangs-NE mit dem PDN verbunden wird.

5. Vorrichtung zum Zugreifen auf ein PDN nach Anspruch 4, wobei die Informationserhalteeinheit Folgendes umfasst:
eine Informationsempfangs-Subeinheit, ausgelegt zum Empfangen einer S1-Aufbauanforderungsnachricht durch das MMNE, wobei die S1-Aufforderungsnachricht die Zugangsinformationen umfasst; und
eine Informationserhalte-Subeinheit, ausgelegt zum Erhalten der in der S1-Aufbauanforderungsnachricht enthaltenen Zugangsinformationen.

6. Vorrichtung zum Zugreifen auf ein PDN nach Anspruch 5, wobei die Informationserhalteeinheit Folgendes umfasst:
eine Speichersubeinheit, ausgelegt zum Speichern der der Zugangsinformationen des Heimat-Zugangs-NE durch das MMNE; und
eine Informationserhalte-Subeinheit, ausgelegt zum Erhalten der gespeicherten Zugangsinformationen des Heimat-Zugangs-NE durch das MMNE.

7. System zum Zugreifen auf ein Paketdatennetzwerk PDN, umfassend:
eine Vorrichtung zum Zugreifen auf ein PDN nach einem der Ansprüche 4 bis 6; und
ein Heimat-Zugangs-NE, ausgelegt zum Austauschen von Informationen zwischen einem Benutzergerät UE und einem PDN;
wobei die Vorrichtung zum Zugreifen auf ein PDN ein "Mobility Management Network Element" MMNE ist.

## Revendications

1. Procédé d'accès à un réseau de données en paquets, PDN, comprenant :
la récupération (201) d'informations d'accès par un élément de réseau de gestion de mobilité, MMNE,
**caractérisé en ce que** le procédé comprend en outre :
la sélection (202), par l'élément MMNE, d'un élément de réseau, NE, d'accès domestique afin d'accéder au réseau PDN par l'intermédiaire d'une interface Gi/SGi en fonction des informations d'accès,
dans lequel les informations d'accès comprennent des informations sur des capacités d'un élément NE d'accès domestique communiquant par l'intermédiaire de l'interface Gi/SGi, et
la sélection, par l'élément MMNE, de l'élément NE pour accéder au réseau PDN par l'intermédiaire de l'interface Gi/SGi en fonction des informations d'accès comprend :
l'envoi par l'élément MMNE d'un message de demande de support de création à l'élément NE d'accès domestique, dans le cas où il est déterminé que l'élément NE d'accès domestique peut communiquer par l'intermédiaire de l'interface Gi/SGi, de telle sorte que l'élément NE d'accès domestique soit relié au réseau PDN par l'intermédiaire de l'interface Gi/SGi sur l'élément NE d'accès domestique.

2. Procédé d'accès à un réseau PDN selon la revendication 1, dans lequel la récupération des informations d'accès comprend :
la réception, par l'élément MMNE, d'un message de demande d'établissement d'interface S1, où le message de demande d'établissement d'interface S1 comprend les informations d'accès, et
la récupération, par l'élément MMNE, des informations d'accès comprises dans le message de demande d'établissement d'interface S1.

3. Procédé d'accès à un réseau PDN selon la revendication 1, dans lequel la récupération par l'élément MMNE des informations d'accès comprend :
la mémorisation, par l'élément MMNE, des informations d'accès de l'élément NE d'accès domestique, et
la récupération, par l'élément MMNE, des informations d'accès mémorisées de l'élément NE d'accès domestique.

4. Appareil permettant d'accéder à un réseau de données en paquets, PDN, comprenant :
une unité de récupération d'informations (501) configurée pour récupérer des informations d'accès,
**caractérisé en ce que** l'appareil comprend en outre :
une unité de sélection (502) configurée pour sélectionner un élément de réseau, NE, d'accès domestique afin d'accéder au réseau PDN par l'intermédiaire d'une interface Gi/SGi en fonction des informations d'accès,
dans lequel les informations d'accès comprennent des informations sur des capacités de l'élément NE d'accès domestique communiquant par l'intermédiaire de l'interface Gi/SGi, et
l'unité de sélection (502) est configurée dans le cas où il est déterminé que l'élément NE d'accès domestique peut communiquer par l'intermédiaire de l'interface Gi/SGi afin d'envoyer un message de demande de support de création à l'élément NE d'accès domestique de telle sorte que l'élément NE d'accès domestique soit relié au réseau PDN par l'intermédiaire de l'interface Gi/SGi sur l'élément NE d'accès domestique.

5. Appareil permettant d'accéder à un réseau PDN selon la revendication 4, dans lequel l'unité de récupération d'informations comprend :
une sous-unité de réception d'informations configurée pour recevoir un message de demande d'établissement d'interface S1, le message de demande d'établissement d'interface S1 comprenant les informations d'accès, et
une sous-unité de récupération d'informations configurée pour récupérer les informations d'accès comprises dans le message de demande d'établissement d'interface S1.

6. Appareil permettant d'accéder à un réseau PDN selon la revendication 5, dans lequel l'unité de récupération d'informations comprend :
une sous-unité de stockage configurée pour mémoriser les informations d'accès de l'élément NE d'accès domestique, et
une sous-unité de récupération d'informations configurée pour récupérer les informations d'accès mémorisées de l'élément NE d'accès domestique.

7. Système permettant d'accéder à un réseau de données en paquets, PDN, comprenant :
un appareil permettant d'accéder à un réseau PDN conformément à l'une quelconque des revendications 4 à 6, et
un élément NE d'accès domestique configuré pour échanger des informations entre un équipement utilisateur, UE, et un réseau PDN,
dans lequel l'appareil permettant d'accéder à un réseau PDN est un élément de réseau de gestion de mobilité, MMNE.
